# EUROPÄISCHE PATENTSCHRIFT

(11) **EP 1 175 572 B1**
(45) Veröffentlichungstag und Bekanntmachung des Hinweises auf die Patenterteilung: **22.10.2003**
(21) Anmeldenummer: 00936616.2
(22) Anmeldetag: 13.04.2000
(51) Int. Cl.: F16G 13/16

(54) **ENERGIEFÜHRUNGSKETTE**
CONDUIT CARRIER CHAIN
CHAINE POUR LE GUIDAGE DE LIGNES D'ALIMENTATION EN ENERGIE

(30) Priorität: 19.04.1999 DE 19919075; 19.04.1999 DE 29907446 U; 19.04.1999 DE 29907447 U
(43) Veröffentlichungstag der Anmeldung: 30.01.2002
(73) Patentinhaber: IGUS SPRITZGUSSTEILE FÜR DIE INDUSTRIE GmbH, D-51147 Köln (DE)
(72) Erfinder: BLASE, Frank, D-51429 Bergisch Gladbach (DE); MÖNIKES, Dirk, D-50676 Köln (DE)
(74) Vertreter: Lippert, Stachow, Schmidt & Partner
(86) Internationale Anmeldenummer: DE0001137
(87) Internationale Veröffentlichungsnummer: WO00063583

(56) Entgegenhaltungen:
- DE-U- 29 907 446
- DE-U- 29 907 447
- US-A- 5 829 243
- US-A- 5 839 476
- US-A- 5 890 357

## Beschreibung

Die Erfindung betrifft eine Energieführungskette aus gelenkig miteinander verbundenen, stirnseitig offenen Kettengliedern, die zwei Seitenelemepte umfassen, wobei mindestens ein Kettenglied ein erstes an seinen Seitenelementen angeordnetes Verbindungsmittel zur gelenkigen Verbindung mit dem an einer Stirnseite benachbarten Kettenglied um eine quer zur Längsrichtung der Kette verlaufende erste Achse und ein zweites Verbindungsmittel zur gelenkigen Verbindung mit dem an der anderen Stirnseite benachbarten Kettenglied um eine senkrecht zur ersten Achse und quer zur Längsrichtung der Kette verlaufenden zweite Achse aufweist.

Derartige Energieführungsketten sind zum Beispiel aus der US 5 839 476 A bekannt. Die in dieser Druckschrift beschriebenen Ketten setzen sich aus Kettengliedern mit einem U-förmigen Querschnitt, die an ihrem offenen seitlichen Wandungsteil mit Hilfe von Deckeln zu öffnen und zu schließen sind, zusammen, wobei die Deckel aller Kettenglieder an ein und derselben Seite der Energieführungskette angeordnet sind. Nach öffnen der Deckel lassen sich die Leitungen in einfacher Weise an der betreffenden Seite der Energieführungskette in diese einlegen oder aus dieser entfernen.

Zumindest ein Abschnitt der bekannten Energieführungskette setzt sich aus zwei verschiedenen, sich abwechselnden Grundformen von Kettengliedern zusammen. Die erste Grundform weist an ihren Seitenelementen Öffnungen zur gelenkigen Verbindung mit der an einer Stirnseite benachbarten zweiten Grundform und an ihrem Deckel sowie an der dem Deckel gegenüberliegenden Wandung Zapfen zur gelenkigen Verbindung mit der an der anderen Stirnseite benachbarten zweiten Grundform auf. Die zweite Grundform weist entsprechend an ihren Seitenelementen Zapfen zum Eingriff in die Öffnungen der ersten Grundform und an ihrem Deckel sowie der dem Deckel gegenüberliegenden Wandung Öffnungen auf, in die die Zapfen der ersten Grundform eingreifen.

Aufgrund des U-förmigen Profils der Kettenglieder der bekannten Energieführungskette sind gewöhnlich mehrere Schichten von Leitungen zwischen dem Deckel und der diesem gegenüberliegenden Wandung angeordnet. Die benachbart zu der dem Deckel gegenüberliegenden Wandung liegenden Leitungen sind daher nicht leicht zugänglich, so dass sie erst nach Entfernen der darüberliegenden Leitungen herausgenommen werden können.

Der Erfindung liegt die Aufgabe zugrunde, bei einer Energieführungskette der eingangs genannten Art die Zugänglichkeit der im Inneren der Kette liegenden Leitungen zu vereinfachen.

Die Aufgabe wird erfindungsgemäß durch die Merkmale des Patentanspruchs 1 gelöst.

Aufgrund der erfindungsgemäßen Konstruktion sind die in der Energieführungskette liegenden Leitungen in zwei Bereichen mit nur etwa halb so großer Tiefe wie bei den bekannten Energieführungsketten angeordnet, die sich jeweils vom Mittelsteg zu einem der beiden Aussenstege erstrecken. Durch die zu öffnenden Aussenstege sind die in den Bereichen liegenden Leitungen einfacher zugänglich und können somit leichter ohne größere Manipulation der übrigen Leitungen herausgenommen werden.

Ausserdem hat sich herausgestellt, daß die Verbindung der Seitenelemente durch Mittelstege zur besseren Stabilität der Kette beiträgt, die insbesondere dann von Vorteil ist, wenn die Kette beim Einlegen oder Entfernen der Leitungen stark manipuliert wird.

Die Aussenstege der Kettenglieder können alle möglichen Gestaltungen aufweisen, die ein öffnen der betreffenden Seite der Energieführungskette so weit erlauben, dass das Einlegen und Entfernen der Leitungen in bzw. aus den Bereichen zwischen dem Mittelsteg und den Außenstegen bewerkstelligt werden kann. Zum Beispiel können die Außenstege an zumindest einem ihrer Enden mit den Seitenelementen lösbar verbunden sein. In einer anderen Ausführung können die Außenstege aufklappbar an den Seitenelementen angeordnet sein.

In einer besonders einfachen Ausführung können die Außenstege an die Seitenelemente angeformt sein und etwa in ihrem mittleren Bereich Durchbrüche aufweisen, so daß sie sich durch Biegen öffnen lassen. Die Außenlaschen besitzen dann jeweils an den Seitenelementen angeformte Stegteile, deren Enden zum Beispiel übereinanderliegend angeordnet sein können. Die Stegteile können dazu auf gleicher Höhe verlaufen, wobei das Ende eines Stegteils sich über eine stufenförmige Absenkung unter das Ende des anderen Stegteils erstrecken kann. Die Stegteile können auch auf unterschiedlicher Höhe verlaufen.

Der Durchbruch, der die beiden Stegteile voneinander trennt, verläuft vorzugsweise in Längsrichtung der Kette und ist so schmal wie möglich gehalten, so dass sich die Leitungen durch voneinander Wegbiegen der Endbereiche der Stegteile senkrecht zur Kettenlängsrichtung ohne Schwierigkeiten einlegen oder herausnehmen lassen.

In einer bevorzugten Weiterbildung der Erfindung sind die Seitenelemente des Kettenglieds gekröpft ausgebildet mit jeweils einem nach innen gekröpften Laschenteil und einem nach aussen gekröpften Laschenteil. Die zu öffnenden Aussenstege erstrecken sich zweckmäßigerweise zwischen den nach aussen gekröpften Laschenteilen der gegenüberliegenden Seitenelemente des Kettenglieds.

Bei einem Ausführungsbeispiel eines solchen Kettenglieds erstreckt sich der Mittelsteg zwischen den nach innen gekröpften Laschenteilen der gegenüberliegenden Seitenelemente, wobei das erste Verbindungsmittel an den nach aussen gekröpften Laschenteilen angeordnet ist.

Dabei kann das erste Verbindungsmittel aus Öffnungen in den nach aussen gekröpften Laschenteilen und das zweite Verbindungsmittel aus einem an den Mittelsteg angeformten Zapfen bestehen.

Bei einem anderen Ausführungsbeispiel erstreckt sich der Mittelsteg zwischen den nach aussen gekröpften Laschenteilen der gegenüberliegenden Seitenelemente des Kettenglieds, wobei das erste Verbindungsmittel an den nach innen gekröpften Laschenteilen angeordnet ist.

Dabei kann das erste Verbindungsmittel aus an den Laschenteilen angeformten Zapfen, die vom Ketteninneren nach aussen weisen, und das zweite Verbindungsmittel aus einer im Mittelsteg ausgebildeten Öffnung bestehen.

Insbesondere kann die erfindungsgemäße Energieführungskette mindestens ein erstes Kettenglied nach dem ersten vorstehend genannten Ausführungsbeispiel und mindestens ein zweites Kettenglied nach dem zweiten vorstehend genannten Ausführungsbeispiel aufweisen, die an jeder ihrer Stirnseiten gelenkig miteinander verbindbar sind. Das heißt, daß die jeweils ersten und zweiten Verbindungsmittel der beiden Kettenglieder so ausgebildet sind, daß sie bei entsprechender Zusammensetzung der beiden Kettenglieder eine Gelenkverbindung um die erste bzw. zweite Achse bilden.

Durch die Zusammensetzung mindestens eines ersten und eines zweiten Kettenglieds in der Kette läßt sich der Krümmungsbereich der Kette in den drei Raumdimensionen vergrößern. Werden mehrere erste und zweite Kettenglieder abwechselnd miteinander verbunden, so ergibt sich die Möglichkeit einer längeren und stärkeren Krümmung der Kette in diesem Bereich.

Die Seitenelemente des ersten und zweiten Kettenglieds können so gestaltet sein, daß bei jeder Zusammensetzung der beiden Kettenglieder, so daß sie um die erste oder zweite Achse verschwenkbar sind, die betreffenden Seiten der Energieführungskette in jeder Schwenkposition im wesentlichen geschlossen sind. Dabei können die nach außen gekröpften Laschenteile die nach innen gekröpften Laschenteile der jeweiligen benachbarten Seitenelemente überlappen.

In einer bevorzugten Weiterbildung weisen die nach innen gekröpften Laschenteile des zweiten Kettenglieds an ihren in Kettenlängsrichtung weisenden Stirnseiten Vorsprünge auf, die bei Zusammensetzung der beiden Kettenglieder zur Bildung einer Schwenkverbindung um die erste Achse in Taschen des ersten Kettenglieds eingreifen, die an den zum Ketteninneren weisenden Seiten der nach außen gekröpften Laschenteile, den nach innen gekröpften Laschenteilen gegenüberliegend, angeordnet sind.

Die in die an den Innenseiten der Seitenelemente des ersten Kettenglieds angeordneten Taschen eingreifenden Vorsprünge des zweiten Kettenglieds erhöhen die Stabilität der Gelenkverbindung zwischen benachbarten Kettengliedern gegenüber quer zur Kettenlängsrichtung wirkenden Kräften.

Die Vorsprünge können darüber hinaus als Anschläge ausgebildet sein, die mit entsprechenden Anschlagflächen im Inneren der Taschen zur Begrenzung der Schwenkwinkel in beiden Schwenkrichtungen um die erste Achse zusammenwirken.

In einer weiteren Ausführung können die nach innen gekröpften Laschenteile des ersten Kettenglieds an ihren in Kettenlängsrichtung weisenden Stirnseiten an einer Seite des Mittelstegs Schlitze zum Eingriff des Mittelstegs des zweiten Kettenglieds und der Mittelsteg des zweiten Kettenglieds angrenzend an ein Seitenelement einen Schlitz zum Eingreifen des betreffenden Stirnendes des benachbarten Seitenteils des ersten Kettenglieds aufweisen, wobei die Schlitze so ausgebildet sind, daß sie Begrenzungswinkel für die Verschwenkung in beiden Richtungen um die zweite Achse festlegen.

Die erfindungsgemäße Energieführungskette kann mindestens ein drittes Kettenglied umfassen, dessen Mittelsteg in zu seinen Stirnseiten benachbarten Bereichen jeweils ein Verbindungsmittel zur gelenkigen Verbindung mit einem an der betreffenden Stirnseite benachbarten Kettenglied um eine senkrecht zum Mittelsteg verlaufende Achse aufweist.

Unter Umständen ist es wünschenswert, in der Energieführungskette abschnittsweise Kettenglieder anzuordnen, die untereinander um senkrecht zum Mittelsteg verlaufende Achsen verschwenkbar sind. In diesen Abschnitten kann sich die Energieführungskette ausschließlich in der senkrecht zu den Schwenkachsen liegenden Ebene krümmen. Zwischen diesen Abschnitten kann die Energieführungskette weitere Abschnitte aufweisen, in denen sich die Kettenglieder wie üblich um senkrecht zu den Seitenelementen verlaufende Achsen verschwenken. Insgesamt ergibt sich dann eine in allen drei Raumdimensionen gelenkig bewegbare Kette, wobei die Stärke der Krümmung in einer bestimmten Ebene durch die Anzahl der in einem zwischengeschalteten Abschnitt angeordneten Kettenglieder mit nicht in dieser Ebene verlaufenden Schwenkachsen bestimmt ist. Je nach dem gewünschten Krümmungsverhalten der Kette kann diese aus geeigneten Abschnitten von Kettengliedern, die in unterschiedlichen Ebenen verschwenkbar sind, zusammengesetzt werden. Die durch die Energieführungskette zwischen einer stationären Basis und einem beweglichen Verbraucher geführten Leitungen können somit vor übermäßigen Biegebeanspruchungen geschützt werden.

Aufgrund seiner Konstruktion kann das dritte Kettenglied in besonders einfacher Weise mit einem benachbarten Kettenglied verbunden werden, ohne dass komplizierte Verbindungsmittel zur Verschwenkung um parallel zu den Seitenelementen verlaufende Achsen erforderlich sind.

Das dritte Kettenglied kann auch als Verlängerungsglied in einer Energieführungskette mit den vorstehend beschriebenen ersten und zweiten Kettengliedern, die eine Krümmung der Kette in allen drei Raumdimensionen ermöglichen, verwendet werden. Bei Verlängerung der Kette durch ein oder mehrere solcher dritten Kettenglieder kann die Kette in dem betreffenden Abschnitt zur ausschließlichen Krümmung um parallel zueinander verlaufende Achsen, die senkrecht zu den Mittelstegen verlaufen, ausgelegt werden. Somit kann die Kette bestimmten gewünschten Krümmungsverläufen besser angepaßt werden.

Vorzugsweise ist der Mittelsteg dieses dritten Kettenglieds gekröpft ausgebildet mit einem zu einer Seite gekröpften ersten Stegteil und einem zur anderen Seite gekröpften zweiten Stegteil, wobei das erste Stegteil als Verbindungsmittel eine Öffnung und das zweite Stegteil als Verbindungsmittel einen Zapfen aufweisen, der an der Seite des zweiten Stegteils, zu der das erste Stegteil hin gekröpft ist, angeformt ist.

Weiterhin können die Seitenelemente des dritten Kettenglieds gekröpft ausgebildet sein und der Abschnitt des Kettenglieds in Kettenlängsrichtung mit den nach aussen gekröpften Laschenteilen so gestaltet sein wie derjenige des zweiten Kettenglieds und der Abschnitt mit den nach innen gekröpften Laschenteilen so gestaltet sein wie derjenige des vorstehend beschriebenen ersten Kettenglieds.

Die erfindungsgemäße Energiekette kann mindestens ein viertes Kettenglied einschließen, dessen Seitenelemente in zu seinen Stirnseiten benachbarten Bereichen jeweils ein Verbindungsmittel zur gelenkigen Verbindung mit einem an der betreffenden Stirnseite benachbarten Kettenglied um eine quer zur Kettenlängsrichtung und parallel zum Mittelsteg verlaufenden Achse aufweisen.

Derartige vierte Kettenglieder können jedoch auch als Verlängerungsstücke einer Energieführungskette, die sich aus den vorstehend beschriebenen ersten und zweiten Kettengliedern zusammensetzt, verwendet werden. Durch eine derartige Verlängerung kann die Kette zur ausschließlichen Verschwenkung um parallel zum Mittelsteg verlaufende Achsen in den betreffenden Bereich ausgelegt werden. Dadurch besteht die Möglichkeit einer optimalen Anpassung der Kette an bestimmte gewünschte Krümmungsverläufe.

In einer bevorzugten Ausführung sind die Seitenelemente des vierten Kettenglieds gekröpft ausgebildet und der Abschnitt des vierten Kettenglieds in Kettenlängsrichtung mit den nach aussen gekröpften Laschenteilen so gestaltet wie derjenige des ersten Kettenglieds und der Abschnitt mit den nach innen gekröpften Laschenteilen so gestaltet wie derjenige des zweiten Kettenglieds.

Ausführungsbeispiele für das erste, zweite, dritte und vierte Kettenglied werden im folgenden anhand der Zeichnung näher beschrieben. In der Zeichnung zeigen:
- Fig. 1: eine perspektivische Ansicht eines ersten Kettenglieds,
- Fig. 2: eine perspektivische Ansicht eines zweiten Kettenglieds,
- Fig. 3: eine perspektivische Ansicht eines dritten Kettenglieds,
- Fig. 4: eine perspektivische Ansicht eines vierten Kettenglieds,
- Fig. 5: eine perspektivische Ansicht eines die Kettenglieder gemäß Fig. 1 bis 4 enthaltenden Abschnitts einer Energieführungskette und
- Fig.6: eine teilweise aufgebrochene Darstellung des Kettenabschnitts gemäß Fig. 5.

Die in der Zeichnung dargestellten Kettenglieder 1, 2, 3 und 4 weisen jeweils zwei Seitenelemente 5, 6 bzw. 7, 8 bzw. 9, 10 bzw. 11, 12 auf, die durch jeweils einen etwa in ihrer Mitte angeordneten Mittelsteg 13 bzw. 14 bzw. 15 bzw. 16 miteinander verbunden sind. Aussen an den Seitenelementen sind zu öffnende Aussenstege 17 bzw. 18 bzw. 19 bzw. 20 vorgesehen.

Die Kettenglieder 1, 2, 3 und 4 sind an ihren zu den offenen Stirnseiten weisenden Bereichen mit Verbindungsmitteln zur gelenkigen Verbindung mit an den Stirnseiten benachbarter Kettenglieder um senkrecht zur Kettenlängsrichtung verlaufenden Schwenkachsen versehen.

Die Aussenstege 17, 18, 19 und 20 bestehen aus an den gegenüberliegenden Seitenelementen einstückig angeformten Stegteilen 21 und 22, zwischen deren freien Enden sich ein Spalt befindet. Das Ende des einen Stegteils 22 ist stufenförmig zum Ketteninneren hin gebogen und untergreift das Ende des anderen Stegteils 21. Aufgrund der Elastizität des Kunststoffmaterials, aus dem die gesamten Kettenglieder 1, 2, 3 und 4 einstückig gespritzt sind, können die Enden voneinander weg gebogen werden, um Leitungen in die Kettenglieder einzulegen oder aus diesen zu entfernen.

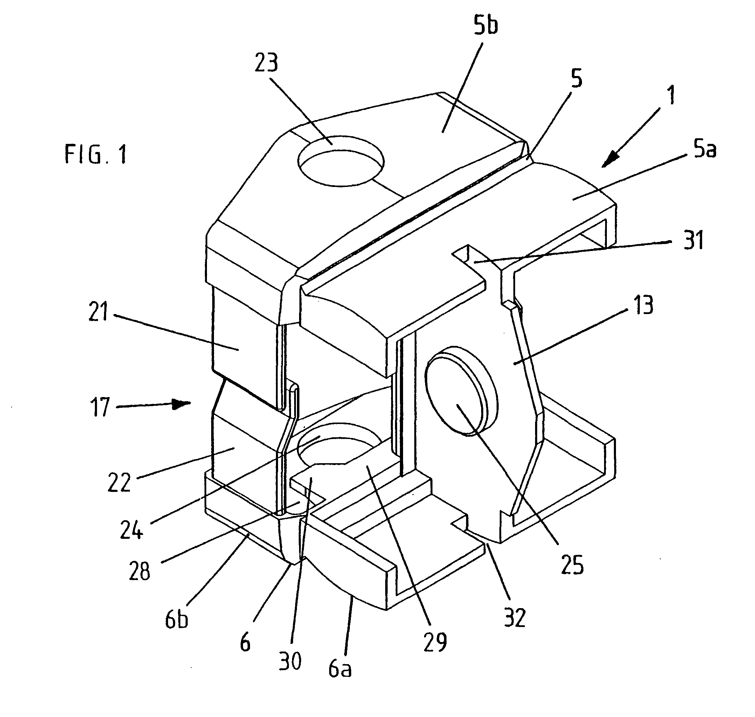

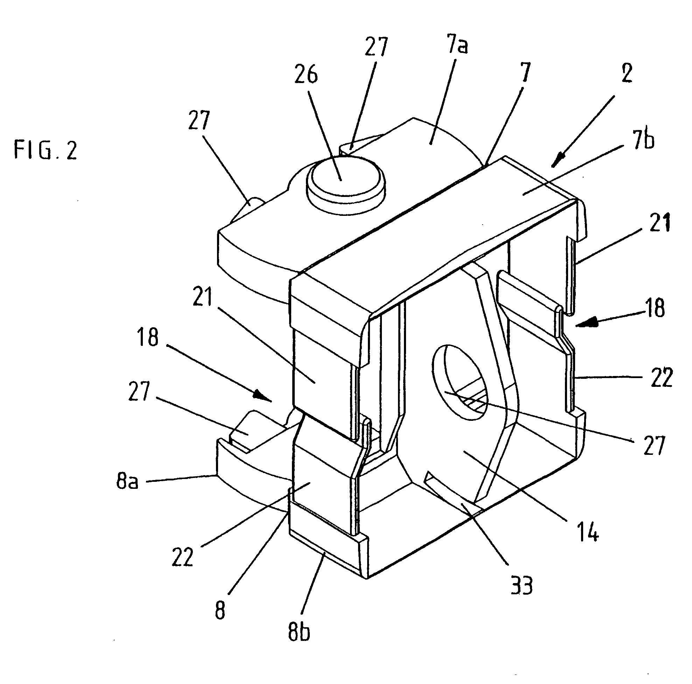

Bei den in den Fig. 1 und 2 dargestellten Kettengliedern 1 und 2 weisen die Seitenelemente 5 und 6 bzw. 7 und 8 erste Verbindungsmittel zur gelenkigen Verbindung mit dem an der betreffenden Stirnseite benachbarten Kettenglied um eine quer zur Kettenlängsrichtung und parallel zum Mittelsteg 13 bzw. 14 verlaufende erste Achse auf. Die Mittelstege 13 und 14 sind mit zweiten Verbindungsmitteln zur gelenkigen Verbindung mit dem an der anderen Stirnseite benachbarten Kettenglied um eine senkrecht zur ersten Achse und quer zur Kettenlängsrichtung laufende zweite Achse versehen.

Bei dem in Fig. 1 gezeigten Kettenglied 1 bestehen die ersten Verbindungsmittel aus Öffnungen 23 und 24 in den Seitenelementen 5 und 6, während die zweiten Verbindungsmittel einen an einer Seite des Mittelstegs 13 ausgebildeten Zapfen 25 aufweisen.

Bei dem in Fig. 2 gezeigten Kettenglied 2 bestehen die ersten Verbindungsmittel aus Zapfen 26 an den Aussenseiten der Seitenteile 7 und 8 und die zweiten Verbindungsmittel aus einer im Mittelsteg 14 vorgesehenen Öffnung 27.

Wie man den Fig. 1 und 2 entnimmt, sind die Seitenelemente 5 und 6 bzw. 7 und 8 der Kettenglieder 1 bzw. 2 gekröpft ausgebildet mit jeweils einem nach innen gekröpften Laschenteil 5a und 6a bzw. 7a und 8a und einem nach außen gekröpften Laschenteil 5b und 6b bzw. 7b und 8b. Die zu öffnenden Aussenstege 17 bzw. 18 erstrecken sich zwischen den nach außen gekröpften Laschenteilen 5b und 6b bzw. 7b und 8b.

Bei dem in Fig. 1 gezeigten ersten Kettenglied 1 erstreckt sich der Mittelsteg 13 zwischen den nach innen gekröpften Laschenteilen 5a und 6a, wobei die das erste Verbindungsmittel bildenden Öffnungen 23 und 24 in den nach aussen gekröpften Laschenteilen 5b und 6b angeordnet sind.

Eine komplementäre Anordnung dazu zeigt das Ausführungsbeispiel gemäß Fig. 2. Hier erstreckt sich der Mittelsteg 14 zwischen den nach aussen gekröpften Laschenteilen 7b und 8b, wobei die das erste Verbindungsmittel bildenden Zapfen 26 an den nach innen gekröpften Laschenteilen 7a und 8a angeordnet sind.

Die aus Öffnungen 23 und 24 bzw. 27 und Zapfen 25 bzw. 26 bestehenden Verbindungsmittel der Kettenglieder 1 und 2 sind so ausgebildet, daß sie bei entsprechender Zusammensetzung der beiden Kettenglieder 1 und 2 eine Gelenkverbindung um die erste bzw. zweite Schwenkachse bilden.

Die Seitenelemente 5 und 6 bzw. 7 und 8 der Kettenglieder 1 und 2 sind so ausgebildet, daß bei jeder Zusammensetzung der beiden Kettenglieder 1 und 2, so daß sie um die erste und zweite Achse verschwenkbar sind, die betreffenden Seiten der Kette in jeder Schwenkposition im wesentlichen geschlossen sind. Die nach außen gekröpften Laschenteile 5b und 6b bzw. 7b und 8b überlappen dabei die nach innen gekröpften Laschenteile 5a und 6a bzw. 7a und 8a.

Wie aus Fig. 2 hervorgeht, sind die nach innen gekröpften Laschenteile 7a und 8a des zweiten Kettenglieds 2 an ihren in Kettenlängsrichtung weisenden Stirnseiten mit Vorsprüngen 27 versehen. Bei Zusammensetzung des Kettenglieds 2 an dieser Stirnseite mit einem Kettenglied 1 zur Bildung einer Schwenkverbindung um die erste Achse greifen die Vorsprünge. 27 in Taschen 28 des Kettenglieds 1 die, wie aus Fig. 1 hervorgeht, an den zum Ketteninneren weisenden Seiten der nach außen gekröpften Laschenteile 5b und 6b, den nach innen gekröpften Laschenteilen 5a und 6a gegenüberliegend, angeordnet sind. Die Vorsprünge 27 sind als Anschläge ausgebildet, die mit Anschlagflächen im Inneren der Taschen 28 zur Begrenzung der Schwenkwinkel in beiden Schwenkrichtungen um die erste Achse zusammenwirken.

Die Taschen 28 sind durch im Abstand und parallel zu den nach außen gekröpften Laschenteilen 5b und 6b angeordnete Stege 29 gebildet. Die Stege 29 weisen in den Bereichen, in denen die Vorsprünge 27 des Kettenglieds 2 die Stege 29 untergreifen, Führungszungen 30 zum einfacheren Unterführen der Vorsprünge 27 beim Zusammensetzen der beiden Kettenglieder 1 und 2 auf.

Die nach innen gekröpften Laschenteile 5a und 6a des Kettenglieds 1 weisen, wie aus Fig. 1 hervorgeht, an ihren in Kettenlängsrichtung weisenden Stirnseiten an einer Seite des Mittelstegs 13 Schlitze 31 und 32 zum Eingriff des Mittelstegs 14 eines dazu benachbarten Kettenglieds 2 auf. Der Mittelsteg 14 des Kettenglieds 2 ist ebenfalls mit einem an das Seitenelement 8 angrenzenden Schlitz 33 zum Eingreifen des Stirnendes des betreffenden Seitenteils 6 des Kettenglieds 1 versehen. Die Schlitze 31, 32 und 33 sind so ausgebildet, daß sie Begrenzungswinkel für die Verschwenkung der beiden Kettenglieder 1 und 2 in beiden Richtungen um die zweite Achse definieren.

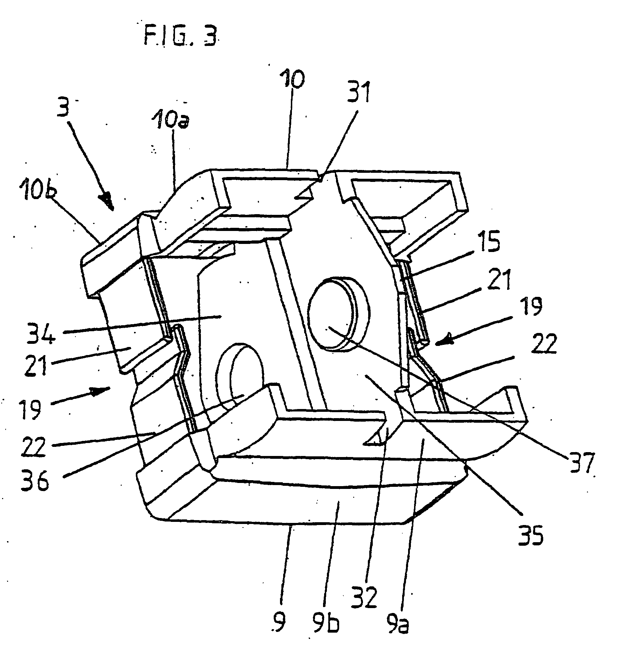

Fig. 3 zeigt ein drittes Kettenglied 3, das zusammen mit den Kettengliedern 1 und/oder 2 in einer Energieführungskette verwendet werden kann.

Der Mittelsteg 15 dieses Kettenglieds weist in zu seinen Stirnseiten benachbarten Bereichen jeweils ein Verbindungsmittel zur gelenkigen Verbindung mit einem an der betreffenden Stirnseite benachbarten Kettenglied um eine senkrecht zum Mittelsteg 15 verlaufende Achse auf.

Wie aus Fig. 3 hervorgeht, ist der Mittelsteg 15 des Kettenglieds 3 gekröpft ausgebildet, mit einem zu einer Seite gekröpften ersten Stegteil 34 und einem zur anderen Seite hin gekröpften zweiten Stegteil 35. Das erste Stegteil 34 besitzt als Verbindungsmittel eine Öffnung 36 und das zweite Stegteil 35 als Verbindungsmittel einen Zapfen 37, der an der Seite des zweiten Stegteils 35, zu der das erste Stegteil 34 hin gekröpft ist, angeformt ist.

Die Seitenelemente 9 und 10 des Kettenglieds 3 sind ebenfalls gekröpft ausgebildet, wobei der Abschnitt des Kettenglieds 3 in Kettenlängsrichtung mit den nach aussen gekröpften Laschen teilen 9b und 10b so gestaltet ist, wie derjenige des Kettenglieds 2. Der Abschnitt des Kettenglieds 3 mit den nach innen gekröpften Laschenteilen 9a und 10a ist so gestaltet, wie derjenige des Kettenglieds 1.

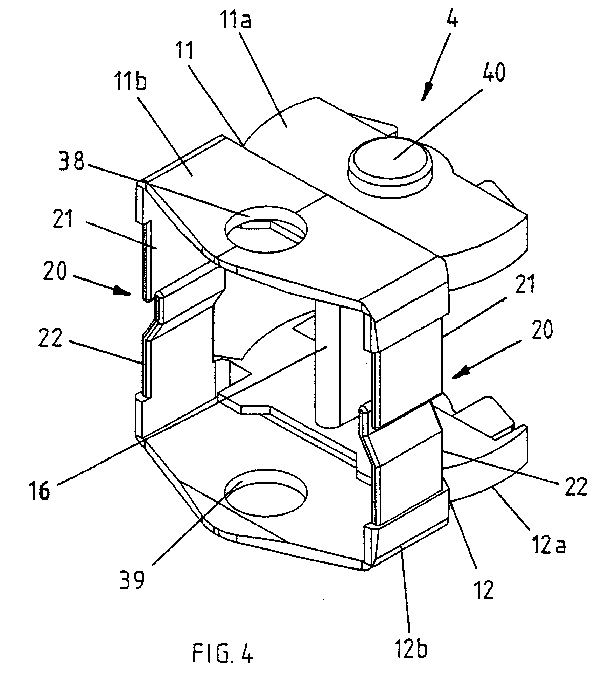

In Fig. 4 ist ein viertes Kettenglied 4 gezeigt, das zusammen mit den vorstehend beschriebenen Kettengliedern 1 und/oder 2 und ggf. auch 3 in einer Energieführungskette verwendet werden kann.

Die Seitenelemente 11 und 12 dieses Kettenglieds weisen in zu dessen Stirnseiten benachbarten Bereichen jeweils ein Verbindungsmittel zur gelenkigen Verbindung mit einem an der betreffenden Stirnseite benachbarten Kettenglied um eine quer zur Kettenlängsrichtung und parallel zum Mittelsteg 16 verlaufende Achse auf. Die Seitentelemente 11 und 12 sind ebenfalls gekröpft ausgebildet, wobei die nach außen gekröpften Laschenteile 11b und 12b als Verbindungsmittel Öffnungen 38, 39 und die nach innen gekröpften Laschenteile 11a und 12a Zapfen 40 aufweisen, die nach außen gerichtet sind.

Der Abschnitt des Kettenglieds 4 in Längsrichtung mit den nach außen gekröpften Laschenteilen 11b und 12b ist so gestaltet wie derjenige des Kettenglieds 1, während der Abschnitt mit den nach innen gekröpften Laschenteilen 11a und 12a so ausgebildet ist wie derjenige des Kettenglieds 2.

Aufgrund der gleichen Ausgestaltung der betreffenden Abschnitte der Kettenglieder 1, 2, 3 und 4 lassen sich diese in beliebiger Kombination zu Kettenabschnitten zusammensetzen, die eine in sich homogene Form bilden.

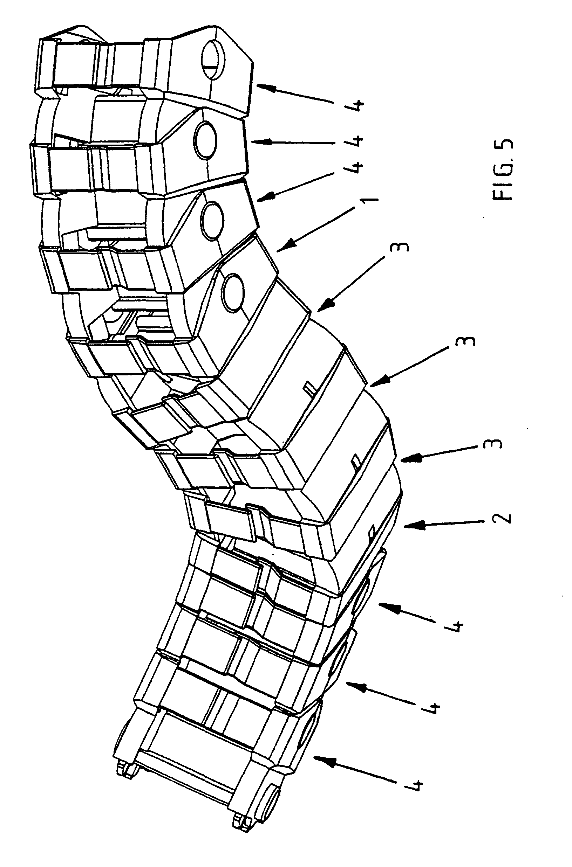

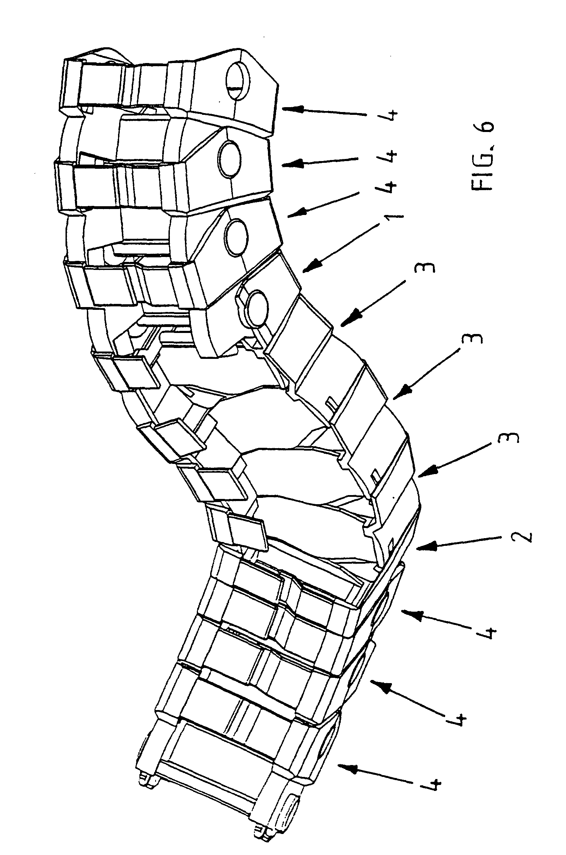

Die Fig. 5 und 6 zeigen ein aus solchen Abschnitten gebildetes Kettenstück. Es besteht im wesentlichen aus drei Abschnitten, die sich wie folgt zusammensetzen. Der im linken Bereich der Fig. 5 und 6 gezeigte Abschnitt besteht aus drei Kettengliedern 4, die um parallel zueinander verlaufende Achsen verschwenkbar sind. Die Kette kann sich in diesem Abschnitt in einer Ebene krümmen.

Der in den Fig. 5 und 6 gezeigte mittlere Abschnitt besteht aus drei Kettengliedern 3, die um senkrecht zu den Achsen der Kettenglieder 4 und zueinander parallel verlaufenden Achsen relativ zueinander verschwenkbar sind. Der Übergang der beiden Abschnitte wird durch ein Kettenglied 2 gebildet, das mit seinen benachbarten Kettengliedern 3 und 4 so verbunden ist, daß der Zapfen 37 am Mittelsteg 15 des Kettenglieds 3 in die Öffnung 27 im Mittelsteg 14 des Kettenglieds 2 und die Zapfen 26 an den Seitenelementen 7 und 8 des Kettenglieds 2 in die Öffnungen 38 und 39 in den Seitenelementen 11 und 12 des Kettenglieds 4 eingreifen.

Der im rechten Bereich der Fig. 6 gezeigte Abschnitt der Kette besteht wieder aus Kettengliedern 4, die um senkrecht zu den Verschwenkachsen der Kettenglieder 3 und untereinander parallel verlaufende Achsen relativ zueinander verschwenkbar sind. Der rechte und der mittlere Abschnitt sind durch ein Kettenglied 1 so miteinander verbunden, dass dessen am Mittelsteg 13 angeformter Zapfen 25 in die im Mittelsteg 15 des benachbarten Kettenglieds 3 eingeformte Öffnung 36 greift und die Zapfen 40 an den Seitenelementen 11 und 12 des benachbarten Kettenglieds 4 in die Öffnungen 23 und 24 in den Seitenelementen 5 und 6 des zwischengeschalteten Kettenglieds 1 eingreifen.

Die Art der Kettenglieder 3 im mittleren Abschnitt und deren Verbindung zu den Kettengliedern des rechten und linken Abschnitts geht insbesondere aus Fig. 6 hervor, in der die Kettenglieder 3 und das diese Kettenglieder mit den Kettengliedern 4 verbindende Kettenglied 1 teilweise aufgebrochen dargestellt sind.

Den Fig. 5 und 6 ist zu entnehmen, dass bei universeller Zusammensetzungsmöglichkeit einer Energieführungskette aus den Kettengliedern 1, 2, 3 und 4 die durchbrochenen Außenstege zum Einlegen und Entfernen der Leitungen an gegenüberliegenden Seiten der Kette durchgehend angeordnet sind. Die verschiedenen Kettenglieder 1, 2, 3 und 4 bilden eine einheitliche Konfiguration.

## Patentansprüche

1. Energieführungskette aus gelenkig miteinander verbundenen, stirnseitig offenen Kettengliedern, die zwei Seitenelemente umfassen, wobei mindestens ein Kettenglied (1;2) ein erstes an seinen Seitenelementen (5, 6; 7, 8) angeordnetes verbindungsmittel zur gelenkigen Verbindung mit dem an einer Stirnseite benachbarten Kettenglied um eine quer zur Kettenlängsrichtung verlaufende erste Achse aufweist, die Seitenelemente (5, 6; 7, 8) dieses Kettenglieds (1; 2) durch einen etwa in ihrer Mitte angeordneten Mittelsteg (13; 14) miteinander verbunden sind und außen mit zu öffnenden Außenstegen (17; 18) versehen sind, der Mittelsteg (13; 14) ein zweites Verbindungsmittel zur gelenkigen Verbindung mit dem an der anderen Stirnseite benachbarten Kettenglied um eine senkrecht zur ersten Achse und quer zur Kettenlängsrichtung verlaufenden zweite Achse aufweist und die übrigen Kettenglieder (3, 4) ebenfalls mit Mittelstegen (15, 16) und zu öffnenden Außenstegen (19, 20) versehen sind, wobei die zu öffnenden Außenstege (19, 20) an den gleichen gegenüberliegenden Seiten der Kette angeordnet sind.

2. Energieführungskette nach Anspruch 1, **dadurch gekennzeichnet, dass** die Aussenstege (17;18;19; 20) an die Seitenelemente (5,6;7,8;9,10;11,12) angeformt sind und etwa in ihrem mittleren Bereich Durchbrüche aufweisen, so dass sie sich durch Biegen öffnen lassen.

3. Energieführungskette nach Anspruch 1 oder 2, **dadurch gekennzeichnet, dass** die Seitenelemente (5,6 ;7,8) des Kettenglieds (1;2) gekröpft ausgebildet sind, mit jeweils einem nach innen gekröpften Laschenteil (5a, 6a;7a,8a) und einem nach außen gekröpften Laschenteil (5b,6b;7b,8b) und sich die zu öffnenden Außenstege (17;18) zwischen den nach außen gekröpften Laschenteilen (5b,6b; 7b,8b) der gegenüberliegenden Seitenelemente (5,6;7,8) des Kettenglieds (1;2) erstrecken.

4. Energieführungskette nach Anspruch 3, **dadurch gekennzeichnet, dass** sich der Mittelsteg (13) zwischen den nach innen gekröpften Laschenteilen (5a,6a) der gegenüberliegenden Seitenelemente (5,6) des Kettenglieds (1) erstreckt und das erste Verbindungsmittel an den nach außen gekröpften Laschenteilen (5b,6b) angeordnet ist.

5. Energieführungskette nach Anspruch 4, **dadurch gekennzeichnet, dass** das erste Verbindungsmittel aus Öffnungen (23,24) in den nach außen gekröpften Laschenteilen (5b,6b) und das zweite Verbindungsmittel aus einem an den Mittelsteg (13) angeformten Zapfen (25) bestehen.

6. Energieführungskette nach Anspruch 3, **dadurch gekennzeichnet, daß** sich der Mittelsteg (14) zwischen den nach außen gekröpften Seitenlaschen (7b,8b) der gegenüberliegenden Seitenelemente (7,8) des Kettenglieds (2) erstreckt und das erste Verbindungsmittel an den nach innen gekröpften Laschenteilen (7a,8a) angeordnet ist.

7. Energieführungskette nach Anspruch 6, **dadurch gekennzeichnet, dass** das erste Verbindungsmittel aus an den Laschenteilen (7,8) angeformten Zapfen (26), die vom Ketteninneren nach außen weisen, und das zweite Verbindungsmittel aus einer im Mittelsteg (14) ausgebildeten Öffnung (27) bestehen.

8. Energieführungskette mit mindestens einem ersten Kettenglied (1) nach Anspruch 4 oder 5 und mindestens einem zweiten Kettenglied (2) nach Anspruch 6 oder 7, **dadurch gekennzeichnet, dass** die jeweils ersten und zweiten Verbindungsmittel der beiden Kettenglieder (1,2) so ausgebildet sind, daß sie bei entsprechender Zusammensetzung der beiden Kettenglieder (1,2) eine Gelenkverbindung um die erste bzw. zweite Achse bilden.

9. Energieführungskette nach Anspruch 8, **dadurch gekennzeichnet, dass** bei jeder Zusammensetzung der beiden Kettenglieder (1,2), so daß sie um die erste oder zweite Achse verschwenkbar sind, ihre die Seitenelemente (5,6) und (7,8) aufweisenden Seiten in jeder Schwenkposition im wesentlichen geschlossen sind, wobei die nach außen gekröpften Laschenteile (5b,6b und 7b,8b) die nach innen gekröpften Laschenteile (5a,6a und 7a,8a) der jeweiligen benachbarten Seitenelemente (5,7 und 6,8) überlappen.

10. Energieführungskette nach Anspruch 8 oder 9, **dadurch gekennzeichnet, dass** die nach innen gekröpften Laschenteile (7a,8a) des zweiten Kettenglieds (2) an ihren in Kettenlängsrichtung weisenden Stirnseiten Vorsprünge (27) aufweisen, die bei Zusammensetzung der beiden Kettenglieder (1,2) zur Bildung einer Schwenkverbindung um die erste Achse in Taschen (28) des ersten Kettenglieds (1) greifen, die an den zum Ketteninneren weisenden Seiten der nach außen gekröpften Laschenteile (5b,6b), den nach innen gekröpften Laschenteilen (5a, 6a) gegenüberliegend, angeordnet sind.

11. Energieführungskette nach Anspruch 10, **dadurch gekennzeichnet, dass** die Vorsprünge (27) als Anschläge ausgebildet sind, die mit Anschlagflächen im Inneren der Taschen (28) zur Begrenzung der Schwenkwinkel in beiden Schwenkrichtungen um die erste Achse zusammenwirken.

12. Energieführungskette nach Anspruch 10 oder 11, **dadurch gekennzeichnet, dass** die nach innen gekröpften Laschenteile (5a,6a) des ersten Kettenglieds (1) an ihren in Kettenlängsrichtung weisenden Stirnseiten an einer Seite des Mittelstegs (13) Schlitze (31,32) zum Eingriff des Mittelstegs (14) des zweiten Kettenglieds (2) und der Mittelsteg (14) des zweiten Kettenglieds (2) angrenzend an ein Seitenelement (B) einen Schlitz (33) zum Eingreifen des Stirnendes des benachbarten Seitenteils (6) des ersten Kettenglieds (1) aufweisen und die Schlitze (31,32,33) so ausgebildet sind, daß sie Begrenzungswinkel für die Verschwenkung in beiden Schwenkrichtungen um die zweite Achse festlegen.

13. Energieführungskette nach einem der Ansprüche 8 bis 12, **gekennzeichnet durch** mindestens ein drittes Kettenglied (3), dessen Mittelsteg (15) in zu seinen Stirnseiten benachbarten Bereichen jeweils ein Verbindungsmittel zur gelenkigen Verbindung mit einem an der betreffenden Stirnseite benachbarten Kettenglied um eine senkrecht zum Mittelsteg (15) verlaufende Achse aufweist.

14. Energieführungskette nach Anspruch 13, **dadurch gekennzeichnet, daß** der Mittelsteg (15) des Kettenglieds (3) gekröpft ausgebildet ist, mit einem zu einer Seite gekröpften ersten Stegteil (34) und zur anderen Seite gekröpften zweiten Stegteil (35), wobei das erste Stegteil (34) als Verbindungsmittel eine Öffnung (36) und das zweite Stegteil (35) als Verbindungsmittel einen Zapfen (37) aufweisen, der an der Seite des zweiten Stegteils (35), zu der das erste Stegteil (34) hin gekröpft ist, angeformt ist.

15. Energieführungskette nach Anspruch 13, **dadurch gekennzeichnet, daß** die Seitenelemente (9,10) des dritten Kettenglieds (3) gekröpft ausgebildet sind und der Abschnitt des Kettenglieds (3) in Kettenlängsrichtung mit den nach außen gekröpften Laschenteilen (9b,10b) so gestaltet ist wie derjenige des zweiten Kettenglieds (2) und der Abschnitt mit den nach innen gekröpften Laschenteilen (9a,10a) so gestaltet ist wie derjenige des ersten Kettenglieds (1).

16. Energieführungskette nach einem der Ansprüche 8 bis 15, **gekennzeichnet durch** mindestens ein viertes Kettenglied (4), dessen Seitenelemente (11,12) in zu seinen Stirnseiten benachbarten Bereichen jeweils ein Verbindungsmittel zur gelenkigen Verbindung mit einem an der betreffenden Stirnseite benachbarten Kettenglied um eine quer zur Kettenlängsrichtung und parallel zum Mittelsteg (16) verlaufende Achse aufweisen.

17. Energieführungskette nach Anspruch 16, **dadurch gekennzeichnet, dass** die Seitenteile (11,12) des vierten Kettenglieds (4) gekröpft ausgebildet sind und der Abschnitt des Kettenglieds (4) in Kettenlängsrichtung mit den nach außen gekröpften Laschenteilen (11b, 12b) so gestaltet ist wie derjenige des ersten Kettenglieds (1) und der Abschnitt mit den nach innen gekröpften Laschenteilen (11a,12a) so gestaltet ist wie derjenige des zweiten Kettenglieds (2).

## Claims

1. Energy guiding chain consisting of chain links that are open at the front and connected to one another in articulated fashion, each of which comprises two side elements whereby at least one chain link (1; 2) comprises a first connector at its side elements (5, 6; 7, 8) for articulated connection to a chain link adjacent to a front side of said link about a first axis transverse to the longitudinal direction of the chain, the side elements (5, 6; 7, 8) of said link (1; 2) are connected by a centre web (13; 14) located essentially in the middle and which have openable outside webs (17; 18) at the outside, said centre web (13; 14) comprises a second connector for articulated connection to a chain link adjacent to the other front side about a second axis perpendicular to the first axis and transverse to the longitudinal direction of the chain, and the other chain links (3,4) are also provided with centre webs (15, 16) and openable outside webs( 19, 20), where the openable outside webs (19, 20) are located on the same opposite sides of the chain.

2. Energy guiding chain according to Claim 1, **characterised in that** the outside webs (17; 18; 19; 20) are integrally moulded on the side elements (5, 6; 7, 8; 9, 10; 11, 12) and have openings essentially in the middle, so that they can be opened by bending.

3. Energy guiding chain according to Claim 1 or 2, **characterised in that** the side elements (5, 6; 7, 8) of the chain link (1; 2) are of cranked design, each having an inwardly cranked strap section (5a, 6a; 7a, 8a) and an outwardly cranked strap section (5b, 6b; 7b, 8b), and the openable outside webs (17; 18) extend between the outwardly cranked strap sections (5b, 6b; 7b, 8b) of the opposite side elements (5, 6; 7, 8) of the chain link (1; 2).

4. Energy guiding chain according to Claim 3, **characterised in that** the centre web (13) extends between the inwardly cranked strap sections (5a, 6a) of the opposite side elements (5, 6) of the chain link (1), and the first connector is located on the outwardly cranked strap sections (5b, 6b).

5. Energy guiding chain according to Claim 4, **characterised in that** the first connector consists of openings (23, 24) in the outwardly cranked strap sections (5b, 6b) and the second connector of a pin (25) integrally moulded on the centre web (13).

6. Energy guiding chain according Claim 3, **characterised in that** the centre web (14) extends between the outwardly cranked strap sections (7b, 8b) of the opposite side elements (7, 8) of the chain link (2), and the first connector is located on the inwardly cranked strap sections (7a, 8a).

7. Energy guiding chain according to Claim 6, **characterised in that** the first connector consists of pins (26) integrally moulded on the strap sections (7, 8) that extend from inside the chain towards the outside, and the second connector of an opening (27) provided in the centre web (14).

8. Energy guiding chain with at least one first chain link (1) according to Claim 4 or 5 and at least one second chain link (2) as per Claim 6 or 7, **characterised in that** the first and second connectors of the two chain links (1, 2) are each designed such that, when the two chain links (1, 2) are properly assembled, they form an articulated connection about the first and second axis respectively..

9. Energy guiding chain according to Claim 8, **characterised in that**, no matter how the two chain links (1, 2) are connected in order to pivot about the first or second axis, their sides displaying the side elements (5, 6) and (7, 8) are essentially closed in every pivoting position, where the outwardly cranked strap sections (5b, 6b and 7b, 8b) overlap the inwardly cranked strap sections (5a, 6a and 7a, 8a) of the respectively adjacent side elements (5, 7 and 6, 8).

10. Energy guiding chain according to Claim 8 or 9, **characterised in that** the inwardly cranked strap sections (7a, 8a) of the second chain link (2) have projections (27) on the front sides facing in the longitudinal direction of the chain, which engage pockets (28) in the first chain link (1) when the two chain links (1, 2) are connected to form a pivoting connection about the first axis, the pockets (28) being located on the sides of the outwardly cranked strap sections (5b, 6b) facing the inside of the chain and opposite the inwardly cranked strap sections (5a, 6a).

11. Energy guiding chain according to Claim 10, **characterised in that** the projections (27) are designed as stops, which interact with stop surfaces on the inside of the pockets (28), in order to limit the pivoting angle in both pivoting directions about the first axis.

12. Energy guiding chain according to Claim 10 or 11, **characterised in that** the inwardly cranked strap sections (5a, 6a) of the first chain link (1) have slots (31, 32) on one side of the centre web (13) on the front sides facing in the longitudinal direction of the chain, the purpose of which is to engage the centre web (14) of the second chain link (2), and the centre web (14) of the second chain link (2) has a slot (33) adjacent to a side element (8) to engage the front end of the adjacent side element (6) of the first chain link (1), and the slots (31, 32, 33) are designed such that they define limiting angles for pivoting in both directions about the second axis.

13. Energy guiding chain according to one of the Claims 8 to 12, **characterised by** at least a third chain link (3), the centre web (15) of which has a connector in each of the areas adjacent to its front sides for articulated connection to a chain link adjacent to the respective front side about an axis perpendicular to the centre web (15).

14. Energy guiding chain according to Claim 13, **characterised in that** the centre web (15) of the third chain link (3) is of cranked design, with a first web segment (34) cranked to one side and a second web segment (35) cranked to the other side, where the first web segment (34) has an opening (36) as a connector and the second web segment (35) has a pin (37) as a connector, which is integrally moulded on the side of the second web segment (35) towards which the first web segment (34) is cranked.

15. Energy guiding chain according to Claim 13, **characterised in that** the side elements (9, 10) of the third chain link (3) are of cranked design and the section of the third chain link (3) in the longitudinal direction of the chain with the outwardly cranked strap sections (9b, 10b) is designed like that of the second chain link (2) and the section with the inwardly cranked strap sections (9a, 10a) is designed like that of the first chain link (1).

16. Energy guiding chain according to one of the Claims 8 to 15, **characterised by** at least a fourth chain link (4), the side elements (11, 12) of which in areas adjacent to their front sides, each have a connector for articulated connection to a chain link adjacent to the respective front side about an axis transverse to the longitudinal direction of the chain and parallel to the centre web (16).

17. Energy guiding chain according to Claim 16, **characterised in that** the side elements (11, 12) of the fourth chain link (4) are of cranked design and the section of the chain link (4) in the longitudinal direction of the chain with outwardly cranked strap sections (11b, 12b) is designed like that of the first chain link (1) and the section with the inwardly cranked strap sections (11a, 12a) is designed like that of the second chain link (2).

## Revendications

1. Chaîne d'amenée d'énergie formée par des maillons de chaîne reliés de façon articulée les uns aux autres et ouverts du côté frontal, lesquels comprennent deux éléments latéraux, au moins un maillon de chaîne (1 ; 2) comprenant un premier moyen de liaison agencé sur ses éléments latéraux (5, 6 ; 7, 8) pour la liaison avec le maillon de chaîne voisin sur un côté frontal avec articulation autour d'un premier axe qui s'étend transversalement à la direction longitudinale de la chaîne, les éléments latéraux (5, 6 ; 7, 8) de ce maillon de chaîne (1 ; 2) sont reliés l'un à l'autre par une barrette médiane (13 ; 14) agencée approximativement à son milieu, et sont pourvus à l'extérieur de barrettes extérieures (17 ; 18) à ouvrir, la barrette médiane (13 ; 14) comprend un second moyen de liaison pour la liaison avec le maillon de chaîne voisin sur l'autre côté frontal avec articulation autour d'un deuxième axe perpendiculaire au premier axe et transversal à la direction longitudinale de la chaîne, et les autres maillons de chaîne (3, 4) sont également pourvus de barrettes médianes (15, 16) et de barrettes extérieures (19, 20) à ouvrir, et dans laquelle les barrettes extérieures (19, 20) à ouvrir sont agencées sur les mêmes côtés opposés de la chaîne.

2. Chaîne d'amenée d'énergie selon la revendication 1, **caractérisée en ce que** les barrettes extérieures (17 ; 18 ; 19 ; 20) sont conformées sur les éléments latéraux (5, 6 ; 7, 8 ; 9, 10 ; 11, 12) et présentent approximativement dans leur région médiane des traversées, de sorte qu'elles se laissent ouvrir par flexion.

3. Chaîne d'amenée d'énergie selon l'une ou l'autre des revendications 1 et 2, **caractérisée en ce que** les éléments latéraux (5, 6 ; 7, 8) du maillon de chaîne (1 ; 2) sont réalisés coudés, avec chacun une partie de patte coudée vers l'intérieur (5a, 6a ; 7a, 8a) et une partie de patte coudée vers l'extérieur (5b, 6b ; 7b, 8b), et les barrettes extérieures (17 ; 18) à ouvrir s'étendent entre les parties de pattes (5b, 6b ; 7b, 8b) coudées vers l'extérieur des éléments latéraux opposés (5, 6 ; 7, 8) du maillon de chaîne (1 ; 2).

4. Chaîne d'amenée d'énergie selon la revendication 3, **caractérisée en ce que** la barrette médiane (13) s'étend entre les parties de pattes (Sa, 6a) coudées vers l'intérieur des éléments latéraux opposés (5, 6) du maillon de chaîne, et le premier moyen de liaison est agencé sur les parties de pattes (5b, 6b) coudées vers l'extérieur.

5. Chaîne d'amenée d'énergie selon la revendication 4, **caractérisée en ce que** le premier moyen de liaison est constitué par des ouvertures (23, 24) dans les parties de pattes (5b, 6b) coudées vers l'extérieur, et le second moyen de liaison est constitué par des tenons (25) conformés sur la barrette médiane (13).

6. Chaîne d'amenée d'énergie selon la revendication 3, **caractérisée en ce que** la barrette médiane (14) s'étend entre les pattes latérales (7b, 8b) coudées vers l'extérieur des éléments latéraux opposés (7, 8) du maillon de chaîne (2), et le premier moyen de liaison est agencé sur les parties de pattes (7a, 8a) coudées vers l'intérieur.

7. Chaîne d'amenée d'énergie selon la revendication 6, **caractérisée en ce que** le premier organe de liaison est constitué par des tenons (26) conformés sur les parties de pattes (7, 8) et tournés vers l'intérieur de la chaîne, et **en ce que** le second moyen de liaison est constitué par une ouverture (27) ménagée dans la barrette médiane (14).

8. Chaîne d'amenée d'énergie comprenant au moins un premier maillon de chaîne (1) selon la revendication 4 ou 5 et au moins un second maillon de chaîne (2) selon la revendication 6 ou 7, **caractérisée en ce que** le premier et le second organe de liaison respectif des deux maillons de chaîne (1, 2) sont ainsi réalisés que pour une composition correspondante des deux maillons de chaîne (1, 2), ils constituent une liaison articulée autour du premier et du second axe.

9. Chaîne d'amenée d'énergie selon la revendication 8, **caractérisée en ce que** pour chaque composition des deux maillons de chaîne (1, 2) telle qu'ils soient capables de pivoter autour du premier ou du deuxième axe, leurs côtés présentant les éléments latéraux (5, 6) et (7, 8) sont sensiblement fermés dans toute position de pivotement, et **en ce que** les parties de pattes (5b, 6b et 7b, 8b) coudées vers l'extérieur chevauchent les parties de pattes (5a, 6a et 7a, 8a) coudées vers l'intérieur des éléments latéraux voisins respectifs (5, 7 et 6, 8).

10. Chaîne d'amenée d'énergie selon l'une ou l'autre des revendications 8 et 9, **caractérisée en ce que** les parties de pattes (7a, 8a) coudées vers l'intérieur du second maillon de chaîne (2) présentent, sur leurs côtés frontaux tournés dans la direction longitudinale de la chaîne, des saillies (27) qui, lors de l'assemblage des deux maillons de chaîne (1, 2) pour former une liaison pivotante autour du premier axe, s'engagent dans des poches (28) du premier maillon de chaîne (1), lesquelles sont agencées sur les côtés tournés vers l'intérieur de la chaîne des parties de pattes (5b, 6b) coudées vers l'extérieur et à l'opposé des parties de pattes (5a, 6a) coudées vers l'intérieur.

11. Chaîne d'amenée d'énergie selon la revendication 10, **caractérisée en ce que** les saillies (27) sont réalisés sous la forme de butées qui coopèrent avec des surfaces de butée à l'intérieur des poches (28) pour limiter l'angle de pivotement dans les deux directions de pivotement autour du premier axe.

12. Chaîne d'amenée d'énergie selon l'une ou l'autre des revendications 10 et 11, **caractérisée en ce que** les parties de pattes (5a, 6a) coudées vers l'intérieur du premier maillon de chaîne (1) comportent sur leurs côtés frontaux tournés en direction longitudinale de la chaîne et sur un côté de la barrette médiane (13) des fentes (31, 32) pour l'engagement de la barrette médiane (14) du second maillon de chaîne (2), et la barrette médiane (14) du second maillon de chaîne (2) comporte en position adjacente à un élément latéral (8) une fente (33) pour l'engagement de l'extrémité frontale de la partie latérale voisine (6) du premier maillon de chaîne (1), et **en ce que** les fentes (31, 32, 33) sont ainsi réalisées qu'elles fixent des angles de limitation pour le pivotement dans les deux directions de pivotement autour du second axe.

13. Chaîne d'amenée d'énergie selon l'une des revendications 8 à 12, **caractérisée par** au moins un troisième maillon de chaîne (3) dont la barrette médiane (15) comporte, dans les zones voisines de ses faces frontales, un moyen de liaison respectif pour la liaison avec un maillon de chaîne voisin de la face frontale concernée avec articulation autour d'un axe qui s'étend perpendiculairement à la barrette médiane (15).

14. Chaîne d'amenée d'énergie selon la revendication 13, **caractérisée en ce que** la barrette médiane (15) du maillon de chaîne (3) est réalisée coudée, avec une première partie de barrette (34) coudée vers un côté et une deuxième partie de barrette (35) coudée vers l'autre côté, la première partie de barrette (34) comportant à titre de moyen de liaison une ouverture (36) et la seconde partie de barrette (35) comportant à titre de moyen de liaison un tenon (37) qui est conformé sur le côté de la seconde partie de barrette (35) qui est coudée vers la première partie de barrette (34).

15. Chaîne d'amenée d'énergie selon la revendication 13, **caractérisée en ce que** les éléments latéraux (9, 10) du troisième maillon de chaîne (3) sont réalisés coudés, et le tronçon du maillon de chaîne (3) en direction longitudinale de la chaîne avec les parties de pattes (9b, 10b) coudées vers l'extérieur est réalisé de la même manière que celui du second maillon de chaîne (2), et le tronçon avec les parties de pattes (9a, 10a) coudées vers l'intérieur est réalisé de la même manière que celui du premier maillon de chaîne (1).

16. Chaîne d'amenée d'énergie selon l'une des revendications 8 à 15, **caractérisée par** au moins un quatrième maillon de chaîne (4) dont les éléments latéraux (11, 12) présentent chacun dans leur zone voisine de ses faces latérales un moyen de liaison pour la liaison avec un maillon de chaîne voisin du côté frontal concerné avec articulation autour d'un axe qui s'étend transversalement à la direction longitudinale de la chaîne et parallèlement à la barrette médiane (16).

17. Chaîne d'amenée d'énergie selon la revendication 16, **caractérisée en ce que** les parties latérales (11,12) du quatrième maillon de chaîne (4) sont réalisées coudées, et le tronçon du maillon de chaîne (4) en direction longitudinale de la chaîne avec les parties de pattes (11b, 12b) coudées vers l'extérieur est réalisé de la même manière que celui du premier maillon de chaîne (1), et le tronçon avec les parties de pattes (11a, 12a) coudées vers l'intérieur est réalisé de la même manière que celui du second maillon de chaîne (2).
